Europäisches Patentamt

European Patent Office

Office européen des brevets

(19)

(11) Publication number: **0 027 381**
**A1**

(12) **EUROPEAN PATENT APPLICATION**

(21) Application number: **80303615.1**

(22) Date of filing: **14.10.80**

(51) Int. Cl.³: **G 01 M 19/00**

(30) Priority: **15.10.79 US 84985**

(43) Date of publication of application:
**22.04.81 Bulletin 81/16**

(84) Designated Contracting States:
**AT BE CH DE FR GB IT LI LU NL SE**

(71) Applicant: **ANCHOR/DARLING INDUSTRIES, INC.**
**One Belmont Avenue**
**Bala Cynwyd Pennsylvania 19004(US)**

(72) Inventor: **Sulzer, Harry Edward**
**51 Harvey Lane**
**Telford Pennsylvania 18964(US)**

(74) Representative: **Newby, John Ross et al,**
**J.Y. & G.W. Johnson Furnival House 14/18 High Holborn**
**London WC1V 6DE(GB)**

(54) Method for testing snubbers in situ and a snubber and a snubber system for use in the method.

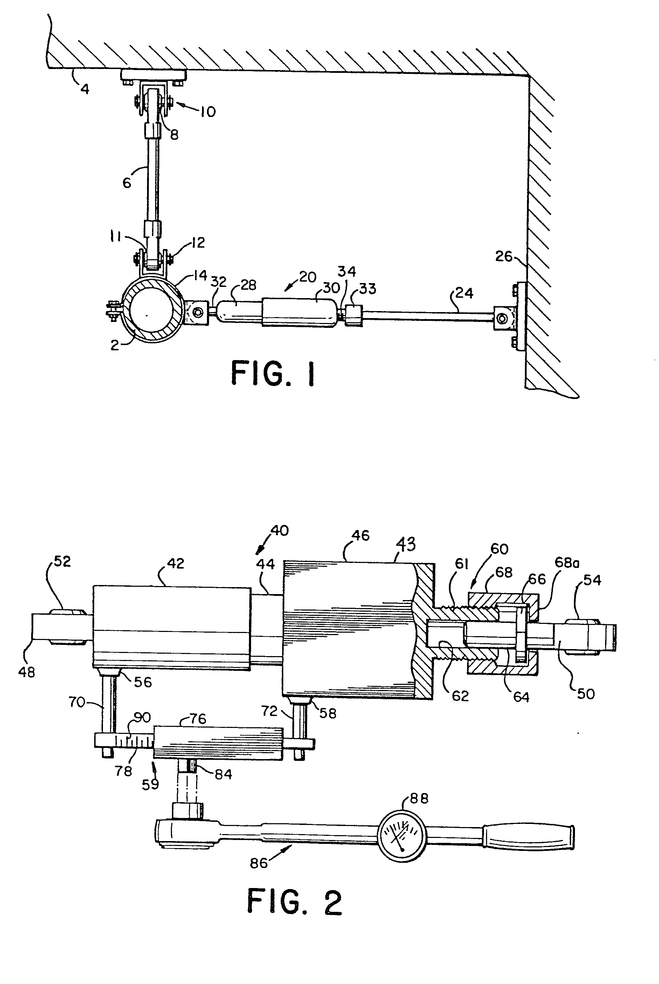

(57) The invention relates to the testing of seismic shock absorbing snubbers (20) *in situ*. Such snubbers are used in power plants in association with piping that is yieldably attached by way of pipe hangers (6) to the plant building structure (4, 26) and permit free motion of the pipe (2) in response to slow thermal expansion or contraction of the pipe, but resist or damp rapid motion of the pipe induced by seismic shock or vibration. In a method aspect of the invention, the snubber system permits testing *in situ* by loosening, but not disconnecting, a connection (33) between the snubber and the pipe (or, alternatively, between the snubber (20) and the support structure (26)) to permit limited motion between two relatively movable sections (28, 30) of the snubber, without inducing movement of the adjacent pipe; then applying a test force between the relatively movable sections of the snubber to cause relative movement therebetween to determine the operation of the snubber. (With Figure 1).

FIG. I

METHOD FOR TESTING SNUBBERS IN SITU AND A SNUBBER AND
A SNUBBER SYSTEM FOR USE IN THE METHOD

Background of the Invention

Shock absorbing or damping snubbers are widely used in electrical generating plants, particularly plants employing nuclear energy, in which pipes are yieldably attached, by way of pipe hangers or supports, to some structure of the plant. In such applications, the snubbers are operatively connected, usually as part of a strut assembly, between the pipe and the structure. The snubber's function is to permit free motion or movement of the pipe relative to the structure in response to slow thermal expansion or contraction of the pipe, but to resist or damp rapid relative motion of the pipe, such as might be induced by seismic shock or vibration.

While the life of a high quality snubber should be of the order of several decades, their function is so important to the safe operation of the electrical generating plants that present practice requires that such snubbers be subjected to periodic test to ensure that they will operate properly. Accordingly, the practice in the industry is to have technicians, who may have to be protected from nuclear radiation encountered in the area, to remove the snubber, or the snubber and strut assembly, bodily from the system. Then the snubber is decontaminated to ensure that radiation therefrom, induced by the environment from which it was taken, is reduced to a level low enough to permit handling by others. Thereafter, the snubber is transported to a test location for examination and test by test personnel. Following test, if the snubber is determined to operate within a desired specification, the snubber is replaced in the system. If the snubber is not performing properly, it must be replaced, or repaired prior to reinstallation.

With large snubbers and snubber and strut assemblies weighing hundreds of kilograms, and with some plants employing hundreds of snubbers, it is evident that such test procedures are highly cumbersome, time-consuming, and expensive to perform. It has been estimated that for each one million U.S. dollars invested in snubbers, a nuclear power plant may spend, over the life of the snubbers, three times that amount or more in performing the required periodic tests in addition to the cost of repairs. The above-enumerated problems involved in current snubber test practices are overcome, according to the present invention, by providing an improved snubber system that lends itself to in situ test procedures and, further, by providing a method for testing such snubbers in their normal, operational location in the snubber system. The test may be performed reliably, quickly, safely and inexpensively.

## Summary of the Invention

According to one aspect of the invention a method of testing for the relative movability between two sections of a snubber, one section of which is coupled to a supporting structure and the other section of which is coupled to a supported structure, is characterised in that a) the coupling between said snubber and one of said structures is temporarily loosened to permit limited movement between the relatively movable sections of said snubber without inducing substantial movement of said supported structure; and b) a test force is applied to the snubber sufficient to cause relative motion between said relatively movable sections of said snubber.

According to a further aspect of the invention a snubber system comprising a supporting structure, a structure supported by said supporting structure, a snubber having two relatively movable sections, means coupling one of said snubber sections to said supporting structure, means coupling the other of said snubber sections to said supported structure, said snubber serving to damp the effects of movement of said supporting structure on said supported structure; is characterised in that there is provided a) means for loosening one of said coupling means to permit limited motion between said relatively movable snubber sections without inducing substantial movement of said supported structure; and (b) test means operatively engageable with said snubber for applying a test force to the snubber system to cause, selectively, extension or contraction of said snubber for determining operation of said snubber.

According to a still further aspect of the invention, a snubber having an operating axis and being adapted to be secured between first and second external structures in a snubber system, said snubber comprising (a) first and second snubber sections movable one with respect to the other; (b) first terminal means on said first snubber section for coupling said first snubber section to said first external structure; (c) second terminal means on said second snubber section for coupling said second snubber section to said second external structure; is characterised in that said snubber is rendered capable of having its operating characteristics tested without removal from its operative position by means of (d) mode selection means interposed between said second snubber section and said second terminal means for providing first and second selective modes of snubber operation, the first mode having the snubber coupled in fixed operative relationship between the first and second external structures and the second mode having the second snubber section movably coupled between the second snubber section and the second terminal means to permit limited movement between the snubber sections for testing snubber operation.

Brief Description of the Drawings

The invention will now be described, by way of example, with reference to the accompanying drawings, in which:-

Figure 1 is an explanatory diagram showing, in elevation, a typical snubber system in which a high pressure steam pipe,

- 4 -

supported from a plant ceiling by a pipe hanger, is protected from the effects of seismic shock by a horizontally disposed strut and snubber combination,

Figure 2 is an enlarged plan, partly broken away, of a conventional snubber provided with a mode selection coupling to permit the carrying out of a test according to the method of the present invention. Also shown is a test instrument attached to the two sections of the snubber, together with a torque wrench to actuate the test instrument,

Figure 3 illustrates a preferred form of snubber and mode selection coupling, and

Figure 4 shows, by way of example, a test fixture that may be employed in performance of the method of testing according to the present invention.

Detailed Description of the Invention

Figure 1 is an explanatory diagram showing a typical snubber system. More specifically, Figure 1 illustrates, in a diagrammatic manner, how a steam pipe, generally designated 2, may be positioned in the environment of a power plant by means of hangers, struts, and snubbers. The steam pipe 2 is supported from a ceiling 4 of the plant structure by means of a suitable pipe hanger 6. The pipe hanger 6 may be attached to the ceiling 4 by any conventional means and as illustrated includes a ball bushing 8 and a pin and clevis assembly, generally designated 10. A similar ball bushing 11 and pin and clevis assembly 12 are shown to attach the hanger 6 to a pipe strap 14. While the pipe hanger 6 supports the full weight of the pipe 2 and its accessories, the presence of the ball-type bearings 8 and 11 and their support assemblies 10 and 12, result in the pipe being yieldably supported by the ceiling, allowing for such motion or movement of the pipe as may result from thermal expansion and contraction. If desired, the pipe hanger 6 may also incorporate a shock absorbing spring means (not shown) for absorbing shocks in the direction of the hanger axis.

To damp excessive motion of the pipe, such as may be caused by water hammer, seismic shock and seismic vibration, it is customary to provide certain lateral support for the pipe. Typically, such support is provided by a snubber generally designated 20 which may be coupled directly to the pipe strap 14, and by a strut 24 to the plant wall structure 26. In practice, the strut 24 may be longer, relative to the snubber 20, than is suggested by Figure 1. In close-coupled systems, where the wall 26 is closer to the pipe 2, it may be possible to dispense with the strut 24, the snubber 20 then constituting the sole element between the pipe 2 and the wall 26. In any event, the snubber connection to the pipe strap 14, as well as the connection between the strut 24 (or the snubber 20) and a clevis mounted on the wall, usually employ suitable self-aligning ball bushings to afford freedom of angular motion at the bushings to accommodate anticipated motion of the pipe relative to the wall and ceiling supports.

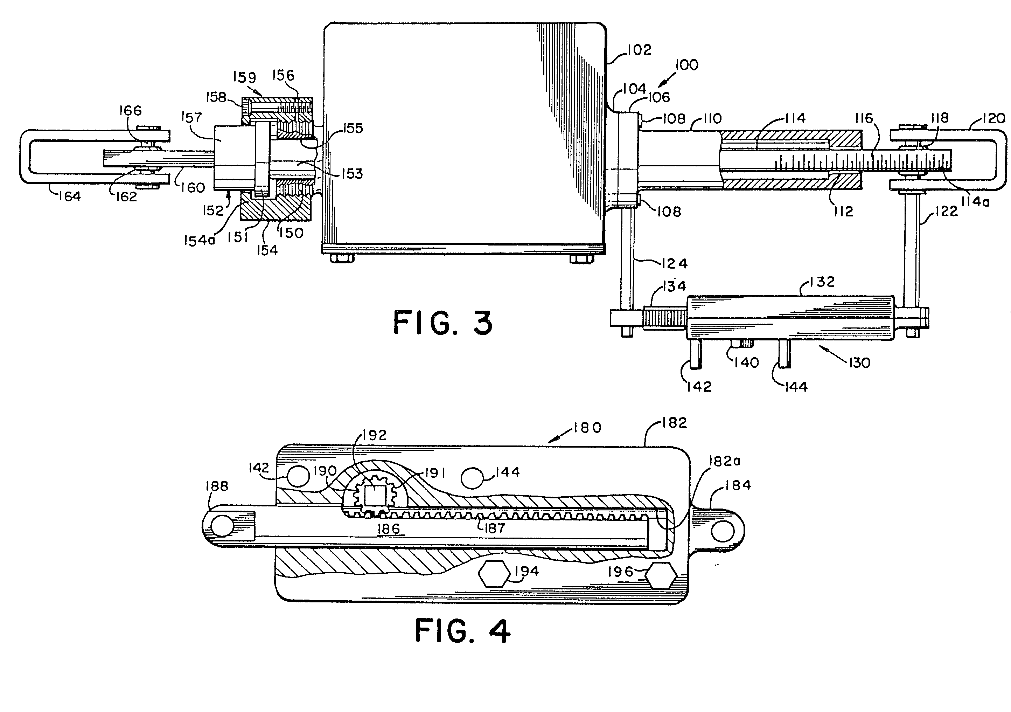

The snubber 20 typically comprises two relatively movable parts or sections 28 and 30, and terminal means 32 and 34, respectively, by means of which the snubber is coupled to pin and clevis assemblies secured to the pipe 2 and the strut 24. Typically, the parts or sections 28 and 30 of the snubber move axially relative to each other and usually the snubber sections are telescopically related. In accordance with the present invention, there may be interposed between the snubber section 30 and the strut 24 a mode selection coupling 33 that provides, selectively, and in the direction of the axis of the snubber and strut assembly, either a fixed tight coupling or a loose freely-sliding coupling, between the parts 30 and 24. Although the mode selection coupling 33, as shown in Figure 1, is interposed proximate terminal means 34 of the snubber, it should be understood that the coupling 33 may be disposed at any suitable location along the strut 24. If the snubber 20 is employed with a further strut (not shown) interposed between the pipe strap 14 and the snubber terminal means 32, the mode selection coupling 33 may be employed at any suitable position along such strut. The mode selection coupling, will now be described in detail with reference to Figures 2 and 3.

Figure 2 illustrates, by way of example, a snubber that is adapted to be tested in accordance with the in situ test feature of the present invention. The snubber, generally designated 40, is a two section, telescoping type, having a first tubular section 42 and a second tubular section 43 which comprises a small diameter cylindrical portion 44 fixed to a larger diameter cylindrical portion 46. During normal operation of the snubber 40, the cylindrical portion 44 of the snubber section 43 slides telescopically into and out of the cylindrical section 42. To afford means for coupling the snubber 40 into a short-coupled snubber system, the section 42 of the snubber is provided with an end terminal 48. The other end of the snubber is provided with an end terminal 50. In the arrangement illustrated, these end terminals 48 and 50 are provided with self-aligning ball bushings 52 and 54 to provide ease of assembly when the snubber is attached to its associated hardware, as described with reference to Figure 1. In systems where a fixed strut (e.g. strut 24 in Figure 1) is employed in association with the snubber 40, the strut may be welded or otherwise secured directly to the end terminal 50, in place of the ball bushing 54.

In accordance with one embodiment of the present invention, the section 42 of the snubber 40 is provided with a suitable boss 56, and the section 43 of the snubber is provided with a similar boss 58, to which a test fixture, generally designated 59 and to be described hereinafter, may be attached. Further, in accordance with the invention, one of the end terminals 48 or 50, is fixedly secured to its associated snubber section, while the other end terminal is secured or coupled by the mode selection coupling, which provides selectively, either a fixed, tight coupling or, alternatively, a smoothly sliding loose coupling, that permits limited freely sliding motion between the snubber section and its associated end terminal. In the embodiment of Figure 2, the end terminal 48 is securely fixed to the snubber section 42, while the end terminal 50 is attached via the above-mentioned mode selection coupling generally designated 60. In the arrangement illustrated in Figure 2 the mode selection coupling 60 comprises a threaded extension 61 of the part 46 of the snubber section 43 having a cylindrical bore 62 adapted slidably to receive a cylindrical stud 64 which is fixed to the end terminal 50. The stud 64 is provided with an integral increased diameter flange 66 adjacent to the portion which is received in the bore 62. A threaded jam nut 68 threadedly engages the threaded extension 61 and extends to encircle and capture the stud 64, by a reduced diameter end 68a. The jam nut 68 serves to hold the end terminal 50 in selective engagement, loose or tight, with the section 43 of the snubber 40 depending on the selected coupling of the jam nut.

In normal operation of the snubber in the system, the jam nut 68 is screwed securely onto the threaded extension 61 of the snubber, so that the flange 66 of the cylindrical stud 64 is fixedly held against the threaded extension 61 by the stud-retaining end 68a of the jam nut 68. This constitutes one of the two modes permitted by the mode selection coupling 60.

When it is desired to test the snubber 40, in accordance with the method of this invention, the jam nut 68 is loosened sufficiently to permit a predetermined amount of telescoping movement between the threaded extension 61 and the cylindrical stud 64. This is the other or second mode of the mode selection coupling, for testing the snubber. That portion of the cylindrical stud 64 engaging the bore 62 is preferably long enough to ensure freely telescoping movement of the parts without cocking. Free motion of the order of one to one and a half centimetres is generally sufficient to permit a meaningful test of the snubber 40, in situ. In the performance of the test procedure envisioned by the present invention, the test fixture 59 is secured to the two sections 42 and 43 of the snubber by means of suitable test fixture adapters 70 and 72, respectively, which are secured to the bosses 56 and 58 and to the test fixture 59 by any suitable means.

While the test fixture 59 may comprise any suitable means for applying axial forces, positive and negative, to the two sections of the snubber 40, so as to cause relative axial movements thereof, the test fixture 59 may conveniently comprise a body portion 76 which includes, as will be described in detail with reference to Figure 4, a pinion (not visible in Figure 2) which may be rotated on its axis by means of an operating stud 84, and a rack 78 (operatively engaged with the pinion), which slides into and out of the body portion 76 in response to rotation of the stud 84. The visible part of the rack 78 which extends out of the body portion 76, may be provided with gauge marks 90 to indicate the amount of relative axial movement of the snubber sections during a test where the snubber itself is not provided with gauge marks for this purpose.

While various test procedures may be employed, a typical test may be performed by loosening the jam nut 68 to provide the necessary freedom of axial movement, applying a conventional torque wrench, generally designated 86, to the stud 84 of the test fixture, slowly moving the sections of the snubber 40 back and forth, within the limits allowed by the freedom of motion afforded by the aforesaid loosening of the jam nut 68, to confirm that slow movement of the snubber sections is freely afforded, when a predetermined low range of force is applied. Then the technician may apply a sudden, predetermined high range of force to the snubber by way of the torque wrench. The desired force within the range of force can be achieved by observing the readings displayed on a calibrated force gauge 88 on the wrench 86. Typically, the force applied to the snubber sections, by way of the test fixture, will be a force related to the force rating F, of the snubber. Suitable test forces would be the force F itself, 3/4 F, 1/2 F, 1/4 F, or the like. Such predetermined force or forces may be applied for a period long enough to effect a predetermined relative movement of the snubber sections as indicated by the gauge marks 90 on the rack 78 (or by gauge marks provided on the snubber itself). Alternatively, such predetermined relative movement of the snubber sections can be determined by movement limiting means associated with the test fixture itself, as will be described with reference to the device illustrated in Figure 4.

The technician, or his associate, then observes the time required to effect the predetermined displacement between snubber sections. By reference to a chart or table of the characteristics of the snubber under test, the technician can determine if the response of the snubber falls within the specifications established for the unit under test. Preferably, all tests are made with both positive and negative applied forces, i.e. with forces that result in both contraction and extension of the snubber, to ensure that the damping effect of the snubber is independent of the direction of the applied forces. Following such tests, the mode selection coupling 60 is returned to its original fixed condition by tightening the jam nut 68, as previously described. The test fixture 59 may then be removed from the snubber adapers 70 and 72.

In some instances, it may not be necessary to subject a snubber to the rigorous test procedures described above. This is particularly true where the snubber employs neither hydraulic systems nor friction braking elements, the effectiveness of which may vary with age, temperature, nuclear radiation and severity of use or service. Thus, in snubbers that are entirely mechanical and employ no friction braking elements, such as those described in our published European Patent Application No. 0014521, it may often be sufficient to test the snubber's freedom of motion or movement, in both extension and retraction, in response only to very slowly applied or low force ranges or levels. If the technician wishes to test snubber operation beyond the last-mentioned test and is thoroughly familiar with the normal characteristics of the snubber under test, he may assure himself that the snubber is capable of performing properly under shock conditions by simply applying, by way of a standard socket wrench, a number of sharply applied, briefly sustained, sudden forces, without regard to the precise torque he applies and without references to tables of snubber characteristics.

Figure 3 shows another embodiment of test fixture which can be used in the method according to the invention applied to a snubber of the type illustrated in Figures 6, 7 and 8 of our published European Patent Application No. 0014521. Such snubbers employ, as their damping mechanism, a rack, a rack-driven escapement wheel and a pallet member having pallets which alternately engage and disengage the teeth of the escapement wheel, thus controlling the rotational speed and/or acceleration of the escapement wheel and, in turn, the relative movement of the two sections of the snubber.

As illustrated in Figure 3, the snubber, here generally designated 100, comprises a first section 102, which includes a rectangular housing, containing the escapement wheel and pallet member of the type mentioned above, and a tubular extension 110 having an integral flange 106 which is secured by way of screws 108 to a boss 104 formed on the housing. The snubber 100 has a second section which has a rack member 114 that drives the above-mentioned escapement wheel in the first snubber section 102, the rack member 114 sliding telescopically into and out of the first section 102 of the snubber 100. The tubular extension 110, has an end opening 112 which serves, in part, as a guide for the rack 114. The exposed terminal end 114a of the rack is provided with a suitable attachment means, shown as a self-aligning ball bushing 118 in Figure 3, for attachment to an external structure by way of a clevis 120. The rack 114 may be provided with gauge marks 116 by means of which relative motion or movement between the telescoping sections of the snubber 100 may be determined or measured.

The housing of section 102 is also provided with a tubular, externally threaded extension 150 through the agency of which the first snubber section 102 may be attached to some other external structure by way of a mode selection coupling generally designated 159 which provides, selectively, the fixed coupling required during normal service of the snubber, and the loose coupling that affords the smoothly sliding, limited movement between the snubber sections required during the in situ test procedure of the present invention. The tubular extension 150 is provided with an internal bore 155 large enough to slidably receive the reduced diameter, pilot portion 153 of a terminal stud shown generally at 152, the latter forming a part of a mode selection coupling 159. The stud 152 has integrally formed thereon a flange 151, the function of which is similar to that of the flange 66 of Figure 2. The stud 152 may include an outer end portion 157 formed beyond the flange 151. Fixedly secured to the end portion 157 may be a conventional snubber terminal end portion 160 The latter may be provided with a self-aligning ball bushing 162 for attachment to a clevis 164 by means of a pin 166. The snubber illustrated in Figure 3 is adapted for use in close-coupled systems, where the snubber assembly alone spans the space (e.g. between a suspended pipe and a support wall).

The stud 152 is held to the threaded tubular extension 150 of the snubber 100 by means of a jam nut 154. In Figure 3, the jam nut 154 is shown in a less than fully tightened position on the threaded extension 150 in order better to show the relation of the parts. In the normal operating condition of the snubber, the jam nut is tightened to ensure that the flange 151 on the stud 152 is fixedly or tightly held or clamped between the distal end of the threaded extension 150 and a flange-retaining shoulder 154a formed by the reduced diameter end of the jam nut 154. Lock means may be employed to ensure that the jam nut 154 will not loosen during long periods of operation of the snubber, which may be subjected to vibration and other motion or forces. For example, the lock means may be provided by a slot 156 formed in or through a part of the wall of the jam nut 154, and a socket head cap screw 158 provided for drawing towards each other the separated parts of the jam nut, thus effectively locking the jam nut on the threaded extension 150.

The *in situ* test fixture, generally designated 130 in Figure 3, may be of the type described hereinafter with reference to Figure 4, and may be attached to the two sections 114 and 102 of the snubber 100 by means of adapters 122 and 124 respectively. The length of the adapters 122 and 124 has been exaggerated in Figure 3 for clarity of illustration. In practice, such adapters should be as short as possible, consistent with providing the necessary mechanical clearance. If desired, the adapter 122 may be an integral extension of the pin that secures the exposed terminal end 114a of the rack 114 to the clevis 120. The adapter 124 may be secured to the flange 106 of the tubular extension 110. If the snubber is installed with the adapters 122 and 124 in place, the technician's task of attaching the test fixture 130 is further simplified. The test fixture 130 may comprise generally a main body portion 132, a rack member 134, and a drive nut 140 which may drive a pinion, (not shown in Figure 3) contained within the body of the test fixture, the pinion acting to effect, selectively, extension or retraction of the rack 134. As previously described with reference to Figure 2, the drive nut 140 may be engaged by a suitable wrench, preferably a torque wrench, for the purpose of applying the test forces.

- 13 -

If desired, the extent of relative motion or movement affected between the two sections of the snubber under test may be determined by gauge marks 116 provided on one section of the snubber, as on the rack 114 in Figure 3, or by gauge marks (not shown) provided on the rack 134 of the test fixture 130. Alternatively, the test fixture 130 may be provided with test limit pins or stops 142, 144 which, by interference with the torque wrench handle serve to determine the limits of the arc through which the torque wrench may be moved and thus, in turn, limit the magnitude of movement effected in one snubber section relative to the other. The test procedure itself can follow that already described with reference to the embodiment of Figure 2.

Referring now to Figure 4, there is illustrated a test fixture or force conversion unit generally designated 180 that may be used in practicing the test procedure of the invention. The test fixture 180 comprises a main body portion 182 which has a longitudinal, generally centrally located cavity 182a opening at one end to receive a rack 186. The rack 186 is provided with rack teeth 187 and may have at its exposed end 188 an aperture usable for attaching the rack to an adapter (as previously described) secured to one section of the snubber, (see Figure 3). The walls forming the cavity 182a serve as guide means for ensuring smooth, telescoping movement of the rack 186 into and out of the main body 182. The main body 182 is provided with an apertured lug 184 at its closed end for securing that end of the test fixture to an adapter, as previously mentioned.

The rack 186 is driven into and out of the main body 182 by means of a drive pinion 190 whose teeth 191 engage the rack teeth 187, in turn, the drive pinion 190 is driven by a drive nut 192 which may be engaged by a suitable ratchet-type socket or torque wrench, as described with regard to Figure 2.

For ease of manufacture, the main body portion 182 of

the test feature 180 may be formed in two mating parts, one of which is the mirror image of the other. In Figure 4, the part nearest the viewer is shown with a portion broken away to reveal the longitudinal cavity 182a, the rack 186, and the pinion 190. The pinion 190 is, of course, suitably journalled in the two parts of the body portion 182. The two parts of the body portion 182 may be secured together by any suitable means such as screws 194 and 196. The body parts may also be secured together by means of pins 142 and 144 (shown in and described with reference to Figure 3).

While a specific form of test fixture has been described in order to afford a complete understanding of the invention and its practice, it should be appreciated that the test fixture illustrated is but one means of conveniently applying a test force between the relatively movable sections of a snubber. Many other known or conventional type devices could be employed. Also, it may be sufficient for some purposes to merely determine whether the snubber sections move with respect to each other or whether the snubber sections are locked. It should be appreciated that a locked snubber may be discovered by merely loosening the coupling described above and simply applying an axial force to the snubber to simulate the forces aniticpated on the snubber during its service life. The force may be applied, for example, to the strut 24, either manually or by utilizing any suitable tools or equipment. If, as a result of the application of the axial force to the snubber 20, the technician visually observes that the two snubber sections 28 and 30 move relative to each other, the snubber is not locked and consequently can be presumed to be operational. If the technician observes some movement of the pipe 2 and no relative motion between the snubber sections 28 and 30, the snubber is locked. Although the invention itself, both in its method and apparatus aspects, has been described with particular reference to certain specific embodiments and test procedures, it will be understood that the invention may be embodied in a large variety of forms diverse from those specifically shown and described without departing from the scope of the invention as defined in the
following claims.

CLAIMS

1. A method of testing for the relative movability between two sections (28, 30) of a snubber (20), one section (30) of which is coupled to a supporting structure (26) and the other section (28) of which is coupled to a supported structure (2), characterised in that

   a) the coupling between said snubber (20) and one of said structures is temporarily loosened to permit limited movement between the relatively movable sections (28, 30) of said snubber (20) without inducing substantial movement of said supported structure (2); and

   b) a test force is applied to the snubber (20) sufficient to cause relative motion between said relatively movable sections (28, 30) of said snubber.

2. The method of testing as claimed in claim 1, characterised in that a test force is applied within a predetermined low range of force to effect slow relative motion between the sections (28, 30) of said snubber (20) such as might be induced by thermal expansion or contraction of one of said structures.

3. The method of testing as claimed in claim 1 or claim 2, characterised in that a test force is applied suddenly, within a predetermined high range of force to simulate a force that might be applied to said snubber (20) under seismic shock conditions and for a period of time sufficient to effect relative movement of a predetermined magnitude between said relatively movable sections (28, 30) of said snubber (20).

4. The method of testing as claimed in claim 3, characterised in that the test force applied within said predetermined high range of force is applied for a period of time sufficient to effect relative movement of a predetermined magnitude between said relatively movable sections (28, 30) of said snubber (20); and said period of time is compared with a time standard established for said snubber.

5. The method of testing as claimed in any preceding claim, characterised in that said test force(s) is (are) applied between said relatively movable sections (28, 30) of said snubber (20) both in one direction to effect extension of said snubber (20), and in the opposite direction to effect contraction of said snubber (20).

6. A snubber system comprising a supporting structure (4, 26), a structure (2) supported by said supporting structure, a snubber (20) having two relatively movable sections (28, 30), means (24) coupling one of said snubber sections (30) to said supporting structure (26), means (32) coupling the other of said snubber sections (28) to said supported structure (2), said snubber serving to damp the effects of movement of said supporting structure (4, 26) on said supported structure (2); characterised in that there is provided
    (a) means (33, 60, 159) for loosening one of said coupling means to permit limited motion between said relatively movable snubber sections (40, 43: 114, 102) without inducing substantial movement of said supported structure (2); and
    (b) test means (59, 86, 130) operatively engageable with said snubber (20) for applying a test force to the snubber system to cause, selectively, extension or contraction of said snubber for determining operation of said snubber.

7. The snubber system as claimed in claim 6, characterised in that means (90, 116) is provided for indicating displacement effected by said test force applied to said snubber.

8. The snubber system as claimed in claim 6, characterised in that said test means (59, 86, 130) includes means (142, 144) for limiting to a predetermined value the displacement effected between said snubber sections by the application of said test force.

9. A snubber (20) having an operating axis and being adapted to be secured between first (2) and second (26) external structures in a snubber system, said snubber comprising:

    (a) first (28, 42) and second (30, 43) snubber sections movable one with respect to the other;

    (b) first terminal means (32, 48) on said first snubber section (28, 42) for coupling said first snubber section to said first external structure (2);

    (c) second terminal means (34, 50) on said second snubber section (30, 43) for coupling said second snubber section to said second external structure (26);

characterised in that said snubber (20) is rendered capable of having its operating characteristics tested without removal from its operative position by means of

    (d) mode selection means (33, 60) interposed between said second snubber section (30, 43) and said second terminal means (34, 50) for providing first and second selective modes of snubber operation, the first mode having the snubber coupled in fixed operative relationship between the first (2) and second (26) external structures and the second mode having the second snubber section (30, 43) movably coupled between the second snubber section and the second terminal means (34, 50) to permit limited movement between the snubber sections for testing snubber operation.

10. The snubber claimed in claim 9, characterised in that said mode selection means (60, 159) comprises:

    (a) an externally threaded extension (61, 150) at the end portion of said second snubber (43, 102), said extension having an internal opening (62, 155);

    (b) a member (64, 153) affixed to said second terminal means (50, 160) and slidably received in said internal opening (62, 155), and said member having an increased diameter portion (66, 151);

(c) coupling means (68, 154) engageable with the increased diameter portion (66, 151) of said member (64, 153) and threadedly engaged with the threaded extension (61, 150) of said snubber section, said coupling means (68, 154) being adjustable to the first mode for holding the increased diameter portion (66, 151) in fixed relationship to the extension (61, 150) of the second snubber section, and to the second mode to permit limited movement between said threaded extension (61, 150) and said member (64, 153), for testing snubber operation.

11. The snubber claimed in claim 10, <u>characterised in that</u> said mode selection means (159) further includes locking means (158) for ensuring the fixed relationship between the member (152) and the extension (150) during operation of the snubber.

12. The snubber claimed in any of claims 9 to 11, <u>characterised in that</u> said snubber further includes connection means (56, 58; 122, 124) for securing thereto a test fixture (59, 130), for applying test forces to said snubber to effect motion of one of said snubber sections (42, 102) relative to the other (43, 116).

13. In a method of testing a snubber (20) in a snubber system including a supporting structure (26), a structure (2) supported by said supporting structure, and a snubber having relatively movable sections (28, 30) <u>characterised in that</u> the test is effected <u>in situ</u> with the relatively movable sections being operatively coupled between said supporting structure (26) and said supported structure (2); the steps of the test comprising:

(a) loosening a coupling (33) between said snubber (20) and one (26) of said structures to permit limited motion between the relatively movable sections (28, 30) of said snubber (20) without inducing substantial movement of said supported structure (2);

(b) applying a test force within a predetermined low range of force between said relatively movable sections (28, 30) to the snubber system to effect slow motion of one snubber section (28) relative to the other (30) so that the response of said snubber (20) to forces induced by thermal expansion or contraction of one of said structures (2) are simulated; and

(c) applying a test force within a predetermined high range of force to the snubber system to simulate forces applied under seismic shock conditions, so that the operation of said snubber (20) may be determined under more severe conditions.

14. A method of testing a snubber (20) in a snubber system including a supporting structure (26), a structure (2) supported by said supporting structure, and a snubber (20) having relatively movable sections (28, 30) and being operatively coupled between said supporting structure (26) and said supported structure (2); characterised in that the snubber (20) is tested in situ by a procedure comprising:

(a) loosening a coupling (33) between said snubber (20) and one (26) of said structures to permit limited motion between the relatively movable sections (28, 30) of said snubber (20) without inducing substantial movement of said supported structure (2);

(b) applying test forces to the snubber system to simulate forces on said snubber anticipated during the service life of said snubber (20), and to reveal the response of said snubber (20) to the application of said forces; and

(c) following completion of step (b) hereof, tightening the coupling (33) loosened in step (a) hereof.

15. The method of testing as claimed in claim 14, <u>characterised in that</u> the test forces are applied between said relatively movable sections (28, 30) of said snubber and include a force within a predetermined low range of force to simulate forces on the subber (20) induced by thermal expansion or contraction of one of the structures to which said snubber is coupled, and also an abruptly-applied high force within a predetermined high range of force to simulate shock forces that might be applied as a result of seismic shock or vibration.

-1/2-

FIG. I

FIG. 2

FIG. 3

FIG. 4

European Patent
Office

**EUROPEAN SEARCH REPORT**

Application number

EP 80 30 3615

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| A | <u>US - A - 4 131 010</u> (W.G. EYRES)<br>* Abstract; figure * | 1 | G 01 M 19/00 |
| | ---- | | |

TECHNICAL FIELDS
SEARCHED (Int. Cl.³)

G 01 M 19/00
F 16 L 3/20
F 16 F 7/00
9/00

CATEGORY OF
CITED DOCUMENTS

X: particularly relevant

A: technological background

O: non-written disclosure

P: intermediate document

T: theory or principle underlying
the invention

E: conflicting application

D: document cited in the
application

L: citation for other reasons

&: member of the same patent
family,
corresponding document

The present search report has been drawn up for all claims

| Place of search | Date of completion of the search | Examiner |
|---|---|---|
| The Hague | 16-01-1981 | VAN ASSCHE |

EPO Form 1503.1 06.78